(19) Europäisches Patentamt
European Patent Office
Office européen des brevets

(11) **EP 3 423 789 B1**

(12) **EUROPEAN PATENT SPECIFICATION**

(45) Date of publication and mention
of the grant of the patent:
**25.11.2020 Bulletin 2020/48**

(51) Int Cl.:
*G01D 4/00* *(2006.01)*   *G01R 15/00* *(2006.01)*
*G01R 19/25* *(2006.01)*   *G01R 21/06* *(2006.01)*
*G01R 21/133* *(2006.01)*   *G01R 27/00* *(2006.01)*

(21) Application number: **17762610.8**

(22) Date of filing: **04.03.2017**

(86) International application number:
**PCT/IB2017/051270**

(87) International publication number:
**WO 2017/153880 (14.09.2017 Gazette 2017/37)**

(54) **SYSTEMS AND METHODS THEREOF FOR DETERMINATION OF A DEVICE STATE BASED ON CURRENT CONSUMPTION MONITORING AND MACHINE-LEARNING THEREOF**

SYSTEME UND VERFAHREN DAFÜR ZUR BESTIMMUNG EINES VORRICHTUNGSZUSTANDS AUF BASIS VON STROMVERBRAUCHSÜBERWACHUNG UND MASCHINELLES LERNEN DAFÜR

SYSTÈMES ET PROCÉDÉS ASSOCIÉS POUR LA DÉTERMINATION D'UN ÉTAT DE DISPOSITIF EN FONCTION D'UNE SURVEILLANCE DE CONSOMMATION DE COURANT ET D'UN APPRENTISSAGE PAR MACHINE ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2016 US 201662304183 P**
**03.03.2017 US 201715449187**

(43) Date of publication of application:
**09.01.2019 Bulletin 2019/02**

(73) Proprietor: **Panoramic Power Ltd.**
**4464312 Kfar Saba (IL)**

(72) Inventors:
• **SHAMIR, Adi**
**4464312 Kfar Saba (IL)**

• **IAROSLAVITZ, Gev Decktor**
**4464312 Kfar Saba (IL)**
• **FLATAU, Theodor**
**4464312 Kfar Saba (IL)**

(74) Representative: **Lohmanns, Bernard**
**Benrather Schlossallee 49-53**
**40597 Düsseldorf (DE)**

(56) References cited:
**US-A1- 2006 178 887**   **US-A1- 2012 290 230**
**US-B2- 6 889 173**   **US-B2- 7 480 641**
**US-B2- 7 664 640**   **US-B2- 9 135 667**

## Description

BACKGROUND OF THE INVENTION

1. Field of the Invention

The invention generally relates to monitoring of power consumption by a device and more particularly to the determination of the operational state of a power consuming device.

2. Prior Art

Recent developments in energy management systems and the Internet of Things (IoT), have enabled easy, and low cost collection and visibility of real time data of energy consumption of not only main power lines but also individual devices. For anyone skilled in the art of energy management, it is obvious that such data contains incredible value that can help facility managers to significantly increase the operational and energy efficiency of energy consuming sites. However, due to the shortage and cost of analytical resources, it is always a great challenge to practically and easily deliver such valuable insights out of so much data. As more and more devices are monitored, the task becomes practically impossible to be manually manage, at least in a manner that provides real-time actionable information.

Some current solutions, such as U.S. Patent Application No. 2012/0290230 A1, discuss methods and apparatuses for monitoring energy consumption using detectable transients of a signal and fitting a plurality of known models to features of the signal to classify the transient. However, these rely on the detection of transient, or a momentary, variation of current or voltage in classifying the signal to help monitor energy consumption, which may not always be easily detectable by a system. U.S. Patent No. 9,135,667 describes a system and method of using an energy use model of a building, which focuses on comparing generated statistics of one building to those of other buildings to help understand energy usage. Such a system requires access to additional data, e.g., energy data of other buildings, to produce a useful result, which may not be easily accessible. U.S. Patent Application No. 2006/0178887 A1 is directed toward a system for estimating parameters of a gaussian mixture model. While such a model is a useful tool for data analysis, direct application to a power consumption monitoring system is not discussed.

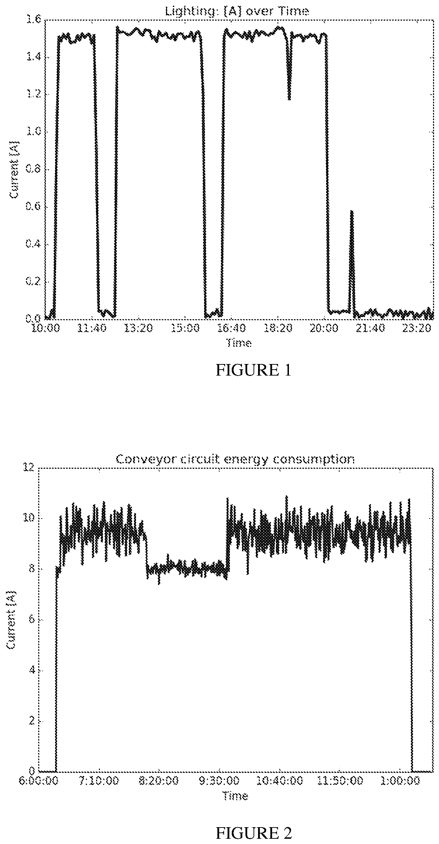

A straightforward example of electric current consumption is depicted in Fig. 1. Current consumption in amperes over a period of several hours, using 1 minute intervals, is provided in the chart. The data may be collected by state of the art devices monitoring current consumption, for example the device discussed in U.S. patent application 12/760,867, entitled "Apparatus and Methods Thereof for Power Consumption Measurements at Circuit Breaker Points", and assigned to common assignee. It is easy to observe the operational states of the circuit just by briefly looking at the chart. For example, it is clear that the light was turned on just before 10:00 am and turned off at 11:40 am. It was then turned on again at 12:30 pm and off before 4:00 pm. The 'On' state is characterized by an average current level around 1.5A, whereas the 'Off' state is characterized by a current close to zero. One of ordinary skill in the art would realize that even in the 'Off' state a low current level may be present as certain devices may still be operative and sensed by the same current monitoring device.

It is easy to realize that these insights have great value for an energy manager, who needs to know that the light was turned on in the morning and off at night according to the expected or predefined schedule. Specifically, the manager can make sure the lights were not on when they were not supposed to, in order to avoid wasting energy. Moreover, it is highly beneficial for one to receive a notification in real time, if the light was turned on or off at the wrong or otherwise unexpected time. Traditionally, an energy manager or an analyst would manually go over the data and look for such anomalies. However, this task becomes impossible to handle when a large number of circuits or devices are involved. Moreover, when alerts are required in real time or in near real time, the detection of the circuit's state, even as simple as 'on' or 'off' in the case of a lighting circuit, are preferably provided automatically.

As shown in Fig. 1, a current threshold may be set, for this particular case at around 1A, so that any current above the threshold is classified as 'On' and any current below the threshold is classified as 'Off'. A software may then process at the data collection point reports the states based on the above threshold. This is the approach taken by some current semiautomatic solutions. The disadvantage of such a solution is that a data analyst is required to look at the data on an individual device level and set such thresholds per circuit, which is obviously a non-scalable approach. This is due to the fact that although different lighting circuits may have patterns of a similar form, these patterns will have different characteristics. For example, the average 'On' current may be higher or lower, as the noise level, e.g., current fluctuations, around the 'On' current may be different. The 'Off' state current may be zero, or some other low current value, resulting from another power consumer connected in parallel to the same lighting circuit. In some cases, low-power power outlets are connected to the lighting wires for either convenience or as a result of a retrofit, and so on. This is also the case shown in Fig. 1. Moreover, such thresholds can be dynamic and change over time; light bulbs may be added or removed, a device performance may deteriorate over time, change of equipment or the addition of more devices in parallel to the circuit, may all contribute to such changes. Therefore such semiautomatic solutions do not provide a good enough scalable solution.

Other, more complex current consumption patterns may also occur. One such example is shown in Fig. 2 that depicts the current consumption over time of a conveyor belt. In this example, the consumption of a conveyor belt carrying heavy raw material in a petro-chemical facility is shown. In this case, one can observe, although not as easily as in the example of Fig. 1, three potentially different operational states: An 'off' state, where the conveyor belt is not working and not consuming any energy, e.g., at around 6 am; an 'on' state, in which the conveyor belt is carrying variable load, e.g., between 7-8 am, with a current varying around an average of 9A; and a third state, in which the conveyor belt is running with a current varying around an average of 7A, which is lower than the average 'on' current, e.g., between 9:00-9:30 am. This third state is in fact an 'idle' state where the conveyor belt is operating with no load, and may be referred to as an 'idle' state. A meticulous observer would also notice, that the current during the 'on' state is noisier, which is due to the varying motor load, as a result of variation in the amount of raw material, whereas in the 'idle' state has a flatter shape is present due to the fact that the motor load is constant, i.e., there are no or little load variations. Furthermore, it is noticeable that the transition phase between the states is more gradual, and is not as clear as in the previous lighting circuit example shown in Fig. 1. This more complex and certainly less deterministic pattern does not yield itself well to simple analysis made by an analyst observing data manually.

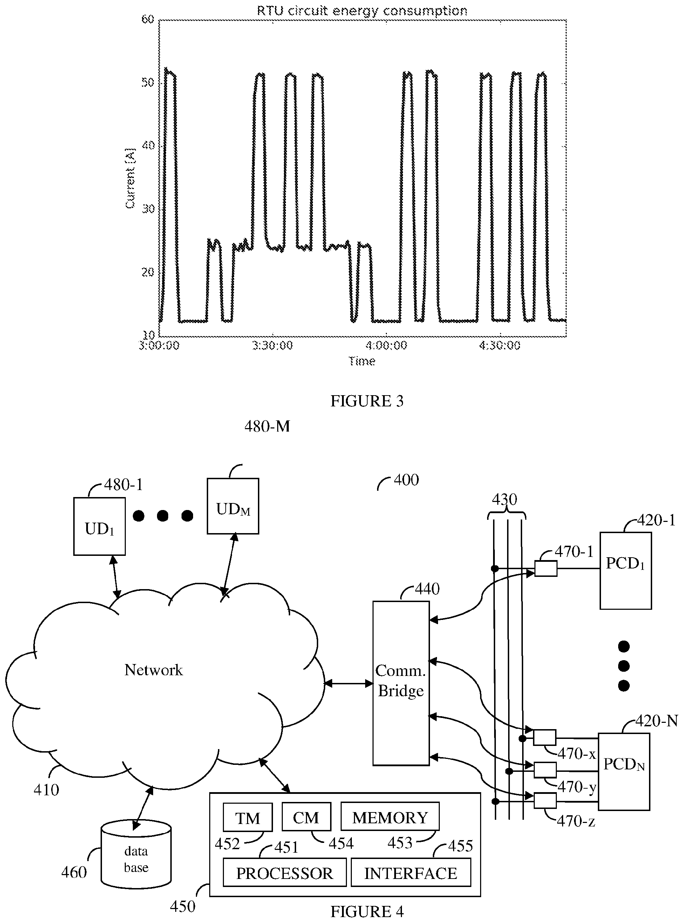

Yet another example with a somewhat different type of complexity is depicted in Fig. 3, where a time chart of current consumption over time of an air conditioning roof top unit (RTU) that comprises of two compressors. The chart shows three discrete operational states: a) a low consumption mode at around 10A, that may be referred to as an 'idle' state, in which only the air handler or fan is operating; b) an intermediate 'on' state at around 25A, in which one compressor is operating; and, c) a high 'on' state of about 50A in which the two compressors are turned on together. Furthermore, the periodic nature of the pattern, i.e., periodic cycling between the on states and the idle state, which is a result of the temperature control mechanism of the unit (the compressor is turned off when the target temperature is reached, and turns on when the temperature goes up again), can be observed. This 'cycling' state can also be referred to as a 'super state' that is a sequence of transitions of the more basic device states.

Considering even the examples above, the simple semi-automatic solutions, requiring human intervention to determine such states and super-states are impractical, time consuming, inefficient and inaccurate over time. One of the major challenges in providing an effective solution to the classification problem is therefore the fact that the processes are unsupervised processes (i.e., the data is not tagged). Therefore it would be advantageous, so as to overcome the deficiencies of the prior art, to provide a solution for automatic and autonomous classification of operational states based on energy consumption or current readings in order to provide practical and effective solutions for power management.

## BRIEF DESCRIPTION OF THE DRAWINGS

The subject matter disclosed herein is particularly pointed out and distinctly claimed in the claims at the conclusion of the specification. The foregoing and other objects, features, and advantages of the disclosed embodiments will be apparent from the following detailed description taken in conjunction with the accompanying drawings.

Figure 1 - is a time chart of current consumption versus time of a lighting circuit;

Figure 2 - is a time chart of current consumption versus time of a conveyor belt circuit;

Figure 3 - is a time chart of current consumption versus time of an air conditioning roof-top unit circuit;

Figure 4 - is a schematic diagram of a system for training and classifying operational states according to an embodiment;

Figure 5 - is a diagram of a probability density of a conveyor belt energy data;

Figure 6 - is a chart displaying time-based presentation operational states of a plurality of power consuming devices according to an embodiment;

Figure 7 - is a flowchart of the operation of a monitoring device according to an embodiment; and

Figure 8 - is a flowchart of the operation of a classification module included in the monitoring device according to an embodiment.

## DETAILED DESCRIPTION OF THE PREFERRED EMBODIMENTS

The present invention is defined by the appended independent claims. Dependent claims constitute embodiments of the invention. Any other subject-matter outside the scope of protection of the claims is to be regarded as examples not in accordance with the invention.

A system for determination of a current consumer operational state operates on two sets of data respective of the current consumer. The first set of data is historical data of current consumption measured periodically. A training module of the system determines a plurality of distinct operational states of the current consumer based on the historical data. The training includes the selection of a model and then determines state parameters based on the model. Once sufficient training takes place, the system uses its classification module to classify, based on the extracted state parameters, a newly received current measurement or measurements, to a distinct operational mode of the current consumer from the plurality of distinct operational states. The training phase may be repeated periodically adding newer data to historical data, and furthermore, dropping older data as newer data is made available, and updates the states and the associated parameters.

Reference is now made to Fig. 4 which is an exemplary and non-limiting schematic diagram of a system 400 for training and classifying operational states according to an embodiment. Communicatively connected to a network 410 is a communication bridge 440 that is wirelessly communicatively connected to one or more self-powered power sensors (SPPSs) 470. Details of an exemplary operation of such an arrangement is provided in more detail in U.S. patent applications numbers 12/760,867 and 14/586,605 both entitled "Apparatus and Methods Thereof for Power Consumption Measurement at Circuit Breaker Points", and U.S. patent application number 14/662,039, entitled "System and Methods Thereof for Monitoring of Energy Consumption Cycles", all assigned to common assignee. The network 410 may be wired, wireless or a combination thereof, it may be a local area network (LAN), a wide area network (LAN), a cellular network, and any other types of networks suitable for the transfer of data thereon. The SPPSs 470 sense currents flowing through power lines 430. To the power lines 430 there may be connected single phase power consuming devices (PCDs) 420, such as PCD 420-1. Such a single phase PCD 420-1 is monitored by a single SPPS 470-1. Furthermore, to the power lines 430 there may be connected a three phase PCD 420, such as PCD 420-N. Such a three phase PCD 420-N may be monitored by three SPPSs 470, 470-x, 470-y and 470-z, one SPPS 470 for each phase. The arrangement discussed herein is exemplary and it is understood that other ways of monitoring power consumption by PCDs 420 may also used. Therefore this particular description should not be read as to limit the generality of the invention.

To the network 410 there may be further connected a database unit 460, the database used for the purpose of storing historical data recorded from the SPPSs 470. These SPPSs 470 provide periodical readings of current consumption from the line they monitor, these are wirelessly transmitted to the communication bridge 440, and then stored as is or after processing, as further explained herein, in the database 460. In addition a monitoring device 450 is communicatively connected to the network and adapted to receive data from either the database 460 or from the communication bridge 440.

As shown in Fig. 4, the monitoring device 450 includes a memory 453, a processor 451, an interface 455, a training module (TM) 452 and a classification module (CM) 454. The interface 455 may be an interface to a network 410 to receive a readings respective of the PCDs 420 over the network 410 and to transmit a signal to at least one of the user devices in Fig. 4 (UDs) 480_1-480_M (M≥1) to display a notification on display devices included in the UDs 480_1-480_M, respectively. The processor 451 may include a processor, such as a microprocessor, a microcontroller, a digital signal processor, or a central processing unit, and other needed integrated circuits such as glue logic. The term "processor" may refer to a device having two or more processing units or elements, e.g. a CPU with multiple processing cores. The processor 451 may be used to control the operations of monitoring device 450 by executing software instructions or code stored in the memory 453. The memory 453 may include one or more different types of storage such as hard disk drive storage, nonvolatile memory, and volatile memory such as dynamic random access memory. In some cases, a particular function as described below may be implemented as two or more pieces of software in the memory 453 that are being executed by different hardware units of a processor 451.

As shown in Fig. 4, the monitoring device 450 further comprises a training module (TM) 452 and a classification module (CM) 454. The memory 453 may have stored therein instructions which when executed by the processor 451, causes the processor 451 to control the functions of the TM 452 and the CM 454. The processor 451 may control the TM 452 which is adapted to receive data pertaining to current measurements received from a particular device over a period of time, use an appropriate model, for example, but not by way of limitation, a Gaussian Mixture Model (GMM), and extract therefrom parameters that enable the determination of different operational states of the PCD 420 being monitored. The TM 452 may use as an input either historical data stored in database 460 or, use live data received from the communication bridge 440 over a period of time. Once the proper parameters are established, CM 454 uses these parameters on live data received from the communication bridge 440 to determine the current state of the PCD 420 being monitored by the monitoring device 450. In an embodiment one or more user devices (UDs) 480 are communicatively connected to the network 410 and are capable, using an appropriate user interface (UI) or an appropriate application programming interface (API), of at least displaying the information respective of the operational state or states of a monitored PCD 420. In one embodiment of the invention, the state information as determined by CM 454 is saved into a database table as part or separated from database 460 and the UDs 480 are using the actual as well as historical state information from the above database. Other analytic tools (not shown) may be further part of system 400 and preform more advanced analysis respective of the state information. In an exemplary and non-limiting embodiment, a rule engine may be used, and results after processing according to these rules are then communicated to UDs 480. These analytic tools can either subscribe directly to the CM 454 output or read state information from the database 460.

In one embodiment, the monitoring device 450 transmits a signal to at least one of the user devices (UDs) 480 to display a notification on the display devices included in the UDs 480, respectively. The notification may include, for example, the current operational state of the power consuming device. The notification may also include a time-based presentation of operational states of the power consuming device (PCD) 420. The notification may also pertain to the operational states of a plurality of power consuming devices (PCD) 420.

The monitoring device 450 is therefore a learning machine adapted to identify the operational states of PCDs 430. In one embodiment it is assumed that the PCD 420 type is known in advance. This assumption may be important because a different model may be required for each PCD 420 type, based on the unique energy consumption pattern of such PCD 420. However, it is possible also to automatically determine the PCD 420 type, i.e., perform a PCD 420 classification on top of the operational state classification. Further, the monitoring device 450 may also eliminate an operational state and the state parameters associated therewith from the operational states associated with the PCD 420. As one of ordinary skill in the art should be able to do so without an additional undue burden, and for the sake of simplicity, the following description does not include PCD 420 type classification, even though it is clearly within the scope of the invention. According to an embodiment the monitoring device 450 requires some historical data for training which is provided from the database 460. The training process may be an offline process operative using TM 452 for a PCD 420 type specific algorithm over a period of historical data extracted from the database 460. This means that a specific algorithm is used for light circuits, conveyor belts, air conditioning (A/C) roof top units (RTU), and so on. Selection of which algorithm to use may be automatic based on the data, automatic based on the PCD 420 type, or manually provided by a user of a UD 480.

The algorithm operative by the TM 452 outputs the characteristic parameters per individual PCD 420 that help determine its operational state in real time. For example, in the simplified case of a lighting circuit shown in Fig. 1 those parameters may include the current level that stands for a transition between the 'On' operational state and 'Off' operational state. The TM 452 may operate periodically and from time to time update those parameters to meet a potentially changing behavior of the PCDs 420. A minimal training period is appropriate in order to ensure that the various operational states of a PCD 420 are properly captured. For example, but not by way of limitation, a one week period may be used, which is sufficient to get a representative energy data profile, as it includes both weekdays and weekend which may be quite different from a power consumption perspective and include with high likelihood data from the operational states of the device. Therefore, a newly installed PCD 420 would require an initial training period before any classification can be sufficiently accurately performed. Seasonal variations may also be taken into account specifically when dealing with heating and cooling PCDs 420 so training may include information from different seasons, and in particular winter and summer, in order to contain a complete set of the operational states of the device. The characteristic parameters for each individual PCD 420 within each PCD 420 type are then provided as an input to CM 454 with respect of each PCD 420. CM 454 is performed as an online process that obtains real time energy data, e.g., current readings as discussed herein, for specific PCDs 420 and employs the classification model using the parameters provided from the TM 452, in order to determine the PCD 420 operational state in real time. A PCD 420 operational state can then be saved, for example, to the database 460, and then used by a set of a UD 480 as well as by various analytic tools also used by the UD 480 as mentioned herein.

According to an embodiment classification is based on a specific model or algorithm that suits a particular PCD 420 type, with characteristic classification parameters that are determined per individual PCD 420 of the above PCD 420 type. A general approach is to view the time based energy data distribution as a mixture of normal Gaussian distributions, each focused around an average and having a particular width. Each such Gaussian is associated with a discrete operational state of the PCD 420. The probability density $f(x,k)$ of each Gaussian is described in formula (1), where $x$ is the energy value (e.g., electric power), $k$ is the state index, $\mu_k$ and $\sigma_k$ are the average and standard deviation of such state respectively.

$$(1)\ f_{x,k} = \frac{1}{\sqrt{2\pi\sigma^2}} e^{-\frac{(x-\eta_k)^2}{2\sigma_k^2}}$$

Once such average and standard deviations of the discrete operational state value distributions are extracted from the historical data using the training module TM 452, they can be used CM 454 to determine the PCD 420 state in real time. This model was well described in industry research and is commonly referred to as the Gaussian Mixture Model (GMM).

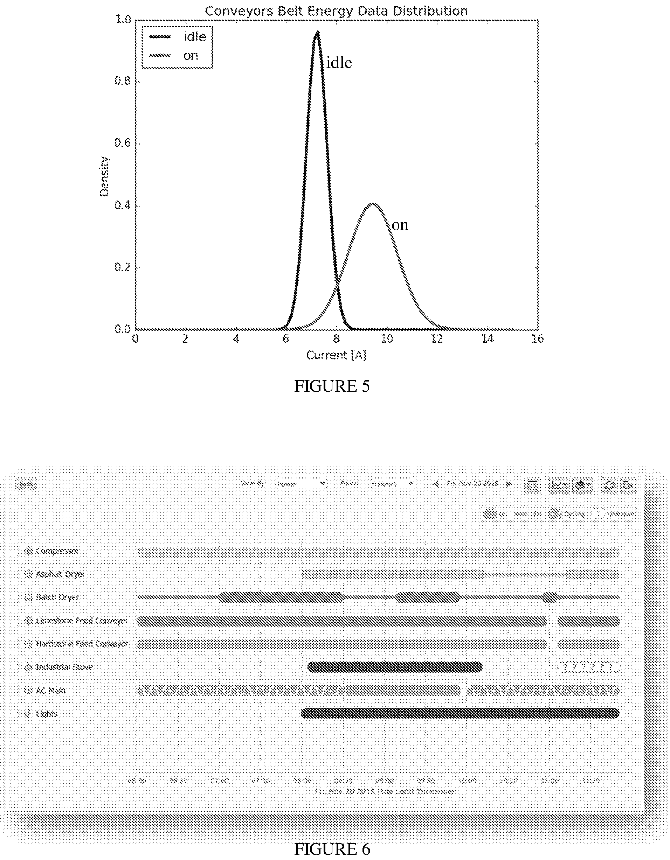

Fig. 5 shows an exemplary and non-limiting diagram of a probability density of a conveyor belt energy data. The diagram is based on the energy distribution for the conveyor belt data depicted in Fig. 2, after applying a GMM algorithm to a batch of historical data using TM 452. The X axis is the current reading, and the Y axis is the probability density. Two states are clearly evident: a) the 'idle' operational state is characterized by an average of approximately 7A, and a relatively narrow distribution; and, b) an 'on' operational state that has an average of 10A with a wider distribution. This is to be expected from the explanation provided to the data in Fig. 2. In this particular example, the average and standard deviation for both operational states, as well as the weights of each operational state are outputs of TM 452, and used as inputs to CM 454.

Although this example describes two distinct Gaussian distributions extracted by TM 452, applicable to the conveyor belt example of Fig. 2, any number of distributions is possible without departing from the scope of the invention. Training for simple devices, such as a lighting circuit, can result in a single Gaussian distribution with a single average and standard deviation. Training for other devices, such as the RTU described in Fig. 3, can result in three Gaussian distributions describing the 'idle' state, the 'single' compressor state and the 'dual' compressor state.

In some cases, the GMM algorithm may also output distributions that do not describe desired states, but perhaps describe transition states that arise from such current readings that are intermediate values read while the device was changing state. Such distributions are typically described by a wide standard deviation and low weight, and are typically apparent between two clearly defined states, for example, between 'single' and 'dual' compressor operational states for a RTU. In one embodiment, the training module TM 452 filters out such state parameters and delivers to the classification module CM 454 only the parameters which are associated with desired classification states.

Sometimes, the training module TM 452, may not be able to qualitatively determine the distinct states. For example, after applying a GMM algorithm, not finding the expected number of Gaussian distributions for a particular PCD 420 type, or, finding distributions that may be not too clear or too wide. In one embodiment, the TM 452 determines whether the plurality of state parameters generated by the TM 452 meets a predetermined quality value. Predetermined quality values may be based on distribution, distribution weight, average current, and state averages. In another embodiment, the TM 452 may determine whether the plurality of state parameters differ from the predetermined quality value by more than a predetermined threshold. In one embodiment, when the parameters do not meet a predetermined quality value or are below the predetermined quality value by more than a predetermined threshold, the training module TM 452 may output an error message. In another embodiment, the training module TM 452 may try to use alternative training models and find one which better suits the PCD 420. In this embodiment, the training module 452 may select a different training module when the plurality of state parameters are determined to differ from the predetermined quality value by more than a predetermined threshold.

Responsive to real time current measurements provided to CM 454 for a PCD 420, for example, PCD 420-1, and further respective of the parameters provided to CM 454 by TM 452 with respect of PCD 420-1, CM 454 determines, for each point of incoming data, in real time, the probability for each operational state and make a decision about the current operational state of PCD 420-1. The probability of a point **x** being related to operational state j can be calculated by a score function derived from the probability density of each state:

$$(2) \ p_{x,j} = \frac{e^{-\frac{(x-\eta_j)^2}{2\sigma_j{}^2}}}{\sum_k e^{-\frac{(x-\eta_k)^2}{2\sigma_k{}^2}}}$$

It is clear that the sum of the function p on all operational states equals to 1, as it is required that each point x will be associated with one operational state. In one embodiment, the maximum value of the above function can be taken. In yet another embodiment, more sophisticated mechanisms, such as but not limited to, a time delay or a hysteresis condition, can be used by CM 454 on top of the probability calculation to determine more accurately the transitions between operational states, filter noisy behavior, and more, without departing from the scope of the invention. For example, in an embodiment of CM 545 implementing a time delay, all consecutive measurements within a time period T may be found to belong to a specific probability state in order to determine the state. In yet another embodiment of CM 454, implementing a hysteresis condition, an even stronger condition of all consecutive measurements within a time period T may be found to belong to a specific probability state with a delta of at least some predefined percent from the probability of the adjacent state in order to decide to switch to a new state. In such embodiments, the period of time T and predefined percentage, or other parameters, are internal parameters of CM 454 that are associated with a specific model, or consumer type. In another embodiment, these can be automatically determined on a consumer type basis or on an individual consumer basis by the training module TM 452.

In some embodiments CM 454, after applying the above logic, may not be able to determine the state of a PCD 420. For example, referring to the above mentioned time delay or hysteresis, if for a predefined period of time no consecutive measurements meet the probability conditions, for example as a result of bouncy readings close to a value in which the probabilities of two distinct states are very close to each other, then CM 454 may declare an 'uncertain' state for a period of time.

In many embodiments, the classification module CM 454 requires additional logic to the GMM training output. A simple example may be considered where, referring to the distributions in Fig. 5, it is clear that current values below 2A should be associated with a 3rd 'Off' state and not with an 'idle' state, as the 'Off' state is typically manifested as a no data state. The parameters associated with the new logic, are internal parameters of CM 454 that are associated with a specific model, PCD 420 type. In another embodiment, these can be automatically determined on a PCD 420 type basis on an individual PCD 420 basis by TM 452.

Sometimes, a PCD 420 is a 3-phase device where all phases are monitored, training and classification is done for each of those 3-phases separately. Therefore, 3-phase states are associated with the PCD 420 state. In one embodiment, CM 454 can therefore determine the PCD 420 operational state by applying a classification process over the results obtained from the classification of the 3 different phases. For example, but not by way of limitation, a majority, a minority or a consensus condition may be used to determine the operation state of the particular 3-phase PCD 420. For example, in a 'majority' condition, the PCD 420 operational state is determined as the operational state of at least two of the three phases. Such determination can vary depending on the PCD 420 type, its previous operational state and the new operational state, as well as the quality of the data. In case of such 3-phase PCD 420 classification, TM 452 may end up with different classification parameters or even a different set of operational states for each phase. In one embodiment, TM 452 may apply logic to determine a single set of parameters and/or operational states which will be delivered to CM 454 that are equal for all phases. In some cases, a 3-phase PCD 420 can be monitored only on one of its phases, and the PCD 420 operational state is determined by the operational state of a single phase. That method is useful for PCDs 420 that are typically balanced, such as, motors. Accordingly, in one embodiment, the readings are based on each phase of a plurality of phases of the power consuming device. In one embodiment, an operational state of the plurality of phases of the power consuming device may be based on one of: majority of phases, minority of phases, or consensus of phases.

In yet another embodiment, CM 454 may be used to determine operational states that consist of a sequence of basic operational states. For example, a 'Cycling' state can be determined as at least two transitions between 'off' or 'idle' states, to 'on' state and vice versa, within a predefined period of time. Such a period of time may be also ruled base to be no less than a minimum period of time and no longer than a maximum period of time. Such operational state can also be defined by the duty cycle, i.e., the period of time of one operational state versus the period of time of the other operational states. Such a 'Cycling' operational state may be typical for PCDs 420 with temperature control, such as heating, ventilation and air-conditioning (HVAC) systems, compressed air systems, refrigeration systems etc.

One of ordinary skill in the art would appreciate that although the GMM model was found to provide a good basis for many PCD 420 types, other algorithms and models can also be used without departing from the scope of the invention. These can be either in addition to, a variation of, or totally different models to the GMM model discussed herein. According to an embodiment, data modeling is performed separately for each PCD 420 to determine the best algorithm which can predict the PCD 420 operational state out of the energy data with the highest success rate, but the overall principle of the solution as presented herein remains.

The determination of operational states may be further used by the system 400 described herein to provide an easy display of the operational states over time of one of more devices. Fig. 6 shows and exemplary and non-limiting chart displaying a time-based presentation of operational states of a plurality of PCDs 420 according to an embodiment. For a typical user of a UD 480, such a view is much more intuitive than the energy data view shown in Figs. 1-3. The chart enables immediate recognition of the actual operational state as well as the history of the operation state of each PCD 420. For example, a drier which is toggling between an 'idle' operational state and an 'on' operational state; lights which were turned on at 8:00 am; a compressor that was on since 6am; and, an A/C that was mostly cycling, but also operated for a long period of time (between 8:30 am and 10:00 am) without cycling at all. Correlation between PCD 420 is also very easy to detect. For example, the stove was turned to an 'on' operational state shortly after the lights were turned to an 'on' operational state, and the two conveyors which were turned to an 'off' operational state simultaneously for about 15 minutes at 11:00am.

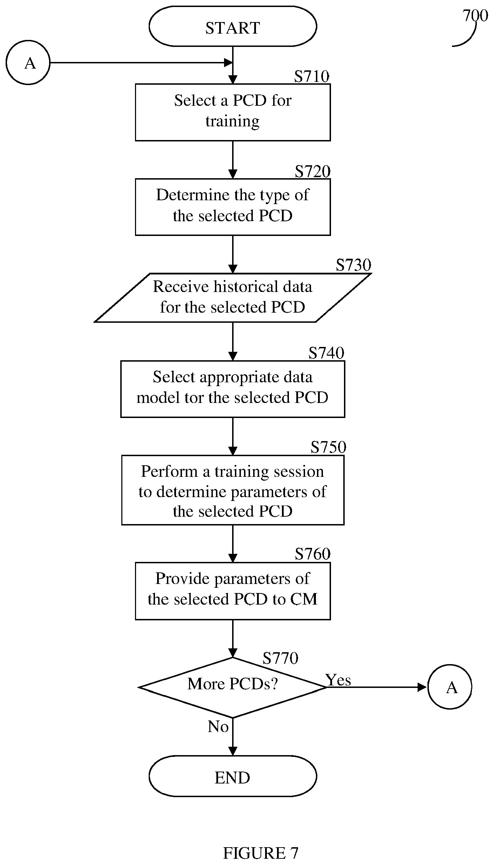

Reference is now made to Fig. 7 where an exemplary and non-limiting flowchart 700 of the operation of a monitoring unit training process according to an embodiment. In S710 a PCD 420 is selected, either manually through a UI or API, or automatically by the monitoring device 450, for a training session by TM 452. In S720 the PCD 420 type is determined, either manually through a UI or API, or by using historical data respective of the type of the selected PCD 420 that may be stored in the database 460, or, automatically. In S730 historical data, for example periodical current measurements, is provided to TM 452 from, for example, database 460. In one embodiment TM 452 receives real-time data for the purpose of training. In S740 selection of the appropriate data model for the selected PCD 420 is made. Such selection may be made manually using a UI or API, or by referring to a previous training data model used for the selected PCD 420 and which was stored in the database 460 or automatically according to the PCD 420 type, or otherwise determined automatically from one or more possible data models by determining which of the data models provides best results for the selected PCD 420. In S750 a training session takes place by TM 452 and as further detailed herein. In particular, parameters of the data model are extracted with resect of the selected PCD 420. In S760 the parameters are provided to CM 454 for the purpose of real-time classification of operational states of the selected PCD 420. In S770 it is checked whether additional PCDs 420 are to be trained and if so, execution continues with S710; otherwise, execution terminates. In one embodiment of the method, a step may be added to test for quality of the state parameters and if the quality is below a predetermined quality value either an error message is sent or an additional cycle of parameter extraction takes place before deployment of the parameters by CM 454. Predetermined quality values may be based on distribution, distribution weight, average current, and state averages. In one embodiment, the TM 452 may determine whether the plurality of state parameters differ from the predetermined quality value by more than a predetermined threshold. For example, the TM 452 may determine whether the state parameters generated differ from the predetermined quality value in that the TM 452 determines that the distribution is wider than a predetermined threshold, the distribution weight is lower than a predetermined threshold, the average current is lower than a predetermined threshold, the average current is higher than a predetermined threshold, or a ratio between state averages is undesirable because it exceeds a predetermined threshold. In this embodiment, the TM 452 may generate and transmit error messages, for example, when the TM 452 determines, for example, a too wide distribution, a low distribution weight, a too low average current, a too high average current, or an undesired ratio between state averages. In some embodiments, the error messages are transmitted to one of the user device (UD) 480 to be displayed. In yet another embodiment, prior to delivery of the parameters from TM 452 to CM 454 a step of filtering out (or eliminating) one or more operational states takes place, for example, transitional operational states may be unnecessary for a particular PCD 420. While current readings are mentioned, other kinds of readings may be used, such as but not limited to, energy or power consumption, without departing from the scope of the invention.

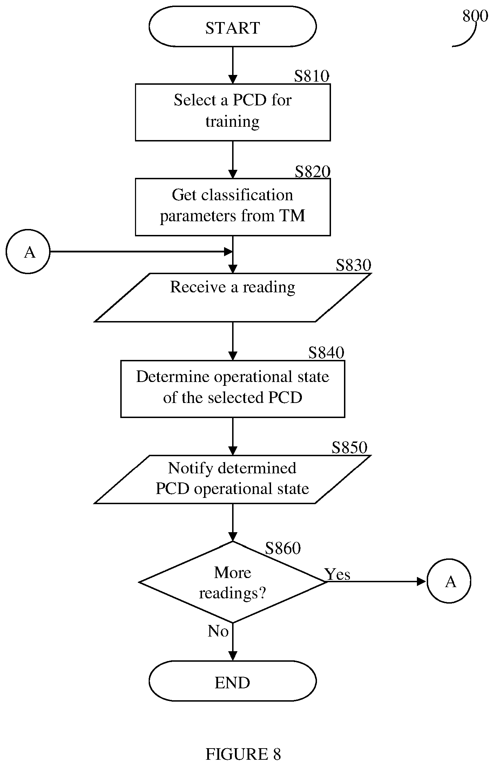

Reference is now made to Fig. 8 where an exemplary and non-limiting flowchart 800 of the operation of a classification module according to an embodiment. In S810 a PCD 420 is selected, either manually through a UI or API, or automatically by the monitoring device 450, for classification by CM 454. In S820, these parameters are provided to CM 454 from the training module TM 452. For example, the parameters for a case of two Gaussian distributions where parameters $\mu_{on}, \sigma_{on}, \mu_{idle}, \sigma_{idle}$ are the average and standard deviations of the operational states 'on' and 'idle' respectively. In addition parameters for an 'Off' operational state may have some low current threshold (i.e., close to zero but necessarily zero) used to detect an 'off' operational state. The parameters of this example can be derived from the conveyor-belt discussed in Figs. 2 and 5. In S830 the CM 454 receives a current reading. In S840 CM 454 determines the operational state of the selected PCD 420. In the exemplary case of the conveyor-belt, if for N consecutive readings, where N is a natural number equal to or greater than '1', the current was below the low current threshold, and the previous situation was different than an 'off' operational state, then the new state declared is an 'off' operational state. If for N consecutive readings, the calculated probability for an 'on' operational state is larger by at least $\Delta$ (e.g., delta ($\Delta$) being a change or a predetermined threshold change) from the 'idle' operational state probability, and the previous operational state was not an 'on' operational state, then an 'on' operational state is declared. An 'idle' operational state is declared if the reverse condition applies. If during N consecutive readings the readings were within not more than $\Delta$ from both the 'idle' and 'on' probabilities, an uncertain state is declared. Probability calculation can be made according to equation 2 above, but is not limited thereto. One of ordinary skill in the art would readily notice that this particular example also includes a delay condition (the N consecutive readings), hysteresis (the $\Delta$ value) as well as an identification of an operational state beyond the GMM distributions found (the Off threshold) as explained herein. In another embodiment the N readings may not be necessarily consecutive but happen within a predetermined period of time. One of ordinary skill in the art would readily now appreciate that additional ways to make determinations with respect of the N readings may be used without departing from the scope of the invention, for example but not by way of limitation, with respect to the majority of the readings within the time period. In S850 a notification may be sent with the newly determined operational state. The notification information can be saved to the database 460, sent directly to one or more UDs 480, or to any other subscriber such as a rule engine. In S860 it is checked whether additional readings should be monitored and if so, execution continues with S830; otherwise, execution terminates.

The various embodiments disclosed herein can be implemented as hardware, firmware, software, or any combination thereof. Moreover, the software is preferably implemented as an application program tangibly embodied on a program storage unit or computer readable medium consisting of parts, or of certain devices and/or a combination of devices. The application program may be uploaded to, and executed by, a machine comprising any suitable architecture. Preferably, the machine is implemented on a computer platform having hardware such as one or more central processing units ("CPUs"), a memory, and input/output interfaces. The computer platform may also include an operating system and microinstruction code. The various processes and functions described herein may be either part of the microinstruction code or part of the application program, or any combination thereof, which may be executed by a CPU, whether or not such a computer or processor is explicitly shown. In addition, various other peripheral units may be connected to the computer platform such as an additional data storage unit and a printing unit. Furthermore, a non-transitory computer readable medium is any computer readable medium except for a transitory propagating signal.

In the description, certain terminology is used to describe features of the invention. For example, in certain situations, the terms "component," "unit," "module," and "logic" are representative of hardware and/or software configured to perform one or more functions. For instance, examples of "hardware" include, but are not limited or restricted to an integrated circuit such as a processor (e.g., a digital signal processor, microprocessor, application specific integrated circuit, a micro-controller, etc.). Of course, the hardware may be alternatively implemented as a finite state machine or even combinatorial logic. An example of "software" includes executable code in the form of an application, an applet, a routine or even a series of instructions. The software may be stored in any type of machine-readable medium.

All examples and conditional language recited herein are intended for pedagogical purposes to aid the reader in understanding the principles of the disclosed embodiment and the concepts contributed by the inventor to furthering the art, and are to be construed as being without limitation to such specifically recited examples and conditions.

**Claims**

1. A method for determining an operational state of a power consuming device (420) consuming electrical energy, the method comprising:

   selecting, by the monitoring device (450), at least one classification model to be applied to a first plurality of readings from a sensor of the power consuming device (420), wherein the classification model is selected according to a type of the power consuming device (420); performing, by the monitoring device (450), a training process using the at least one classification model and the first plurality of readings to determine a plurality of state parameters associated with a plurality of operational states of the power consuming device; receiving, by the monitoring device (450), at least one second reading from the sensor (470); classifying, by the monitoring device (450), the power consuming device (420), wherein classifying includes determining a current operational state of the power consuming device (420) based on the at least one second reading and the plurality of state parameters, wherein the current operational state of the power consuming device (420) is one of the plurality of operational states of the power consuming device (420); and transmitting, by the monitoring device (450), a signal to a user device (480) to display a notification, wherein the notification includes the current operational state of the power consuming device (420).

2. The method of claim 1, wherein the first plurality of readings is based on at least one of: energy, current, or power, and wherein the at least one second reading is based on at least one of: energy, current, or power.

3. The method of claim 1, wherein the at least one classification model includes a Gaussian Mixture Model, wherein performing the training process to determine the plurality of state parameters includes determining state parameters of the Gaussian Mixture Model.

4. The method of claim 1, further comprising: eliminating, by the monitoring device (450), at least one of the plurality of operational states and state parameters associated with the plurality of operational states from the operational states of the power consuming device (420).

5. The method of claim 1, further comprising:

   determining whether the plurality of state parameters generated by a training module (452) included in the monitoring device (450) meet a predetermined quality value; and generating and transmitting by the training module (452) an error message upon determination that the plurality of state parameters differs from the predetermined quality value by more than a predetermined threshold.

6. The method of claim 5, wherein the plurality of state parameters is determined to differ from the predetermined quality value by more than a predetermined threshold when the training module (452) determines at least one of: a too wide distribution, a low distribution weight, a too low average current, a too high average current, or an undesired ratio between state averages.

7. The method of claim 6, further comprising: selecting a different training module (452) when the plurality of state parameters are determined to differ from the predetermined quality value by more than a predetermined threshold.

8. The method of any of claims 1 to 7, wherein performing the training process to determine the plurality of state parameters further includes:

   calculating a probability of the plurality of second readings being associated with one of a plurality of Gaussian distributions and determining a distribution with maximum probability; and associating the distribution with one of the operational states of the power consuming device (420).

9. The method of claim 1, further comprising: determining a plurality of state parameters associated with an additional operational state that is a combination of the plurality of state parameters of at least two of the plurality of operational states.

10. The method of claim 1, the notification further includes a time-based presentation of operational states of the power consuming device (420).

11. A monitoring device (450) for determination of a plurality of operational states of a power consuming device (420) consuming electrical energy, the monitoring device (450) comprising:

an interface (455) to a network (410) to receive a first plurality of readings respective of the power consuming device (420) over the network (410) and to transmit a signal to a user device (480) to display a notification;
a processor (451) coupled to the interface (455);
a memory (453) having stored thereon instructions which when executed by the processor (451) causes the processor (451):

to apply, using a training module (452), at least one classification model on the first plurality of readings to determine a plurality of parameters associated with a plurality of operational states of the power consuming device (420), wherein the classification model is selected according to a type of the power consuming device (420);
to receive via a classifier module (454) from the training module (452) the plurality of parameters associated with the plurality of operational states of the power consuming device (420);
to receive via the classifier module (454) from the interface (455) at least one second reading from the power consuming device (420); and
to classify using the classifier module (454) the power consuming device (420) by determining a current operational state of the power consuming device (420) based on the at least one second reading and the plurality of state parameters, wherein the current operational state of the power consuming device (420) is one of the plurality of operational states of the power consuming device (420), wherein the notification includes the current operational state of the power consuming device (420).

12. The monitoring device of claim 11, wherein the first plurality of readings are based on at least one of: energy, current, or power, and wherein the at least one second reading is based on at least one of: energy, current, or power.

13. The monitoring device of claim 11, wherein the processor (451) is further configured to:

determine parameters of a Gaussian Mixture Model using the training module;
receive from the interface (455) via the classifier module (454) a plurality of second readings from the power consuming device (420);
wherein the parameters of the Gaussian Mixture Model include at least one set of average and standard deviation of a Gaussian distribution representative of at least one operational state of the power consuming device (420).

**Patentansprüche**

1. Verfahren zur Bestimmung eines Betriebszustands einer energieverbrauchenden Vorrichtung (420), die elektrische Energie verbraucht, wobei das Verfahren aufweist:

Auswählen, durch die Überwachungsvorrichtung (450), mindestens eines Klassifizierungsmodells, das auf eine erste Vielzahl von Messwerten von einem Sensor der energieverbrauchenden Vorrichtung (420) anzuwenden ist, wobei das Klassifizierungsmodell entsprechend einem Typ der energieverbrauchenden Vorrichtung (420) ausgewählt wird;
Durchführen, durch die Überwachungsvorrichtung (450), eines Trainingsprozesses unter Verwendung des mindestens einen Klassifizierungsmodells und der ersten Vielzahl von Messwerten, um eine Vielzahl von Zustandsparametern zu bestimmen, die einer Vielzahl von Betriebszuständen der energieverbrauchenden Vorrichtung zugeordnet sind;
Empfangen, durch die Überwachungsvorrichtung (450), mindestens eines zweiten Messwerts von dem Sensor (470);
Klassifizieren, durch die Überwachungsvorrichtung (450), der energieverbrauchenden Vorrichtung (420), wobei das Klassifizieren das Bestimmen eines aktuellen Betriebszustands der energieverbrauchenden Vorrichtung (420) basierend auf dem mindestens einen zweiten Messwert und der Vielzahl von Zustandsparametern enthält, wobei der aktuelle Betriebszustand der energieverbrauchenden Vorrichtung (420) einer der Vielzahl von Betriebszuständen der energieverbrauchenden Vorrichtung (420) ist; und
Senden, durch die Überwachungsvorrichtung (450), eines Signals an eine Benutzervorrichtung (480), um eine Meldung anzuzeigen, wobei die Meldung den aktuellen Betriebszustand der energieverbrauchenden Vorrichtung (420) enthält.

**2.** Verfahren nach Anspruch 1, wobei die erste Vielzahl von Messwerten auf mindestens einem der folgenden Punkte basiert: Energie, Strom oder Leistung, und wobei der mindestens eine zweite Messwert auf mindestens einem der folgenden Punkte basiert: Energie, Strom oder Leistung.

**3.** Verfahren nach Anspruch 1, wobei das mindestens eine Klassifizierungsmodell ein Gaußsches Mischverteilungsmodell enthält, wobei das Durchführen des Trainingsprozesses zur Bestimmung der Vielzahl von Zustandsparametern das Bestimmen von Zustandsparametern des Gaußschen Mischverteilungsmodells enthält.

**4.** Verfahren nach Anspruch 1, ferner aufweisend: Eliminieren, durch die Überwachungsvorrichtung (450), mindestens eines der Vielzahl von Betriebszuständen und Zustandsparametern, die der Vielzahl von Betriebszuständen zugeordnet sind, aus den Betriebszuständen der energieverbrauchenden Vorrichtung (420).

**5.** Verfahren nach Anspruch 1, ferner aufweisend:

Bestimmen, ob die Vielzahl von Zustandsparametern, die von einem in der Überwachungsvorrichtung (450) enthaltenen Trainingsmodul (452) erzeugt werden, einen vorbestimmten Qualitätswert erfüllen; und
Erzeugen und Senden einer Fehlermeldung durch das Trainingsmodul (452) bei der Bestimmung, dass die Vielzahl von Zustandsparametern von dem vorbestimmten Qualitätswert um mehr als einen vorbestimmten Schwellenwert abweicht.

**6.** Verfahren nach Anspruch 5, wobei die Vielzahl von Zustandsparametern bestimmt wird, um sich von dem vorgegebenen Qualitätswert um mehr als einen vorgegebenen Schwellenwert zu unterscheiden, wenn das Trainingsmodul (452) mindestens einen der folgenden Punkte feststellt: eine zu breite Verteilung, ein niedriges Verteilungsgewicht, einen zu niedrigen Durchschnittsstrom, einen zu hohen Durchschnittsstrom oder ein unerwünschtes Verhältnis zwischen Zustandsdurchschnitten.

**7.** Verfahren nach Anspruch 6, ferner aufweisend: Auswählen eines anderen Trainingsmoduls (452), wenn festgestellt wird, dass die Vielzahl von Zustandsparametern von dem vorbestimmten Qualitätswert um mehr als einen vorbestimmten Schwellenwert abweicht.

**8.** Verfahren nach einem der Ansprüche 1 bis 7, wobei das Durchführen des Trainingsprozesses zur Bestimmung der Vielzahl von Zustandsparametern ferner aufweist:

Berechnen einer Wahrscheinlichkeit, dass die Vielzahl von zweiten Messwerten einer von mehreren Gaußschen Verteilungen zugeordnet ist, und Bestimmen einer Verteilung mit maximaler Wahrscheinlichkeit; und
Zuordnen der Verteilung zu einem der Betriebszustände der energieverbrauchenden Vorrichtung (420).

**9.** Verfahren nach Anspruch 1, ferner aufweisend: Bestimmen einer Vielzahl von Zustandsparametern, die einem zusätzlichen Betriebszustand zugeordnet sind, der eine Kombination der Vielzahl von Zustandsparametern von mindestens zwei der Vielzahl von Betriebszuständen ist.

**10.** Verfahren nach Anspruch 1, wobei die Meldung ferner eine zeitbasierte Darstellung von Betriebszuständen der energieverbrauchenden Vorrichtung (420) enthält.

**11.** Überwachungsvorrichtung (450) zur Bestimmung einer Vielzahl von Betriebszuständen einer energieverbrauchenden Vorrichtung (420), die elektrische Energie verbraucht, wobei die Überwachungsvorrichtung (450) aufweist:

eine Schnittstelle (455) zu einem Netzwerk (410), um eine erste Vielzahl von Messwerten bezüglich der energieverbrauchenden Vorrichtung (420) über das Netzwerk (410) zu empfangen und ein Signal an eine Benutzervorrichtung (480) zu senden, um eine Meldung anzuzeigen;
einen Prozessor (451), der mit der Schnittstelle (455) gekoppelt ist;
einen Speicher (453) mit darauf gespeicherten Befehlen, die, wenn sie von dem Prozessor (451) ausgeführt werden, den Prozessor (451) veranlassen:

unter Verwendung eines Trainingsmoduls (452) mindestens ein Klassifizierungsmodell auf die erste Vielzahl von Messwerten anzuwenden, um eine Vielzahl von Parametern zu bestimmen, die einer Vielzahl von Betriebszuständen der energieverbrauchenden Vorrichtung (420) zugeordnet sind, wobei das Klassifizierungsmodell entsprechend einem Typ der energieverbrauchenden Vorrichtung (420) ausgewählt ist; über ein Klassifizierungsmodul (454) von dem Trainingsmodul (452) die Vielzahl von Parametern zu empfangen, die der Vielzahl von Betriebszuständen der energieverbrauchenden Vorrichtung (420) zugeordnet sind;

über das Klassifizierungsmodul (454) von der Schnittstelle (455) mindestens einen zweiten Messwert von der energieverbrauchenden Vorrichtung (420) zu empfangen; und

unter Verwendung des Klassifizierungsmoduls (454) die energieverbrauchende Vorrichtung (420) zu klassifizieren, indem ein aktueller Betriebszustand der energieverbrauchenden Vorrichtung (420) basierend auf dem mindestens einen zweiten Messwert und der Vielzahl von Zustandsparametern bestimmt wird, wobei der aktuelle Betriebszustand der energieverbrauchenden Vorrichtung (420) einer der Vielzahl von Betriebszuständen der energieverbrauchenden Vorrichtung (420) ist, wobei die Meldung den aktuellen Betriebszustand der energieverbrauchenden Vorrichtung (420) enthält.

12. Überwachungsvorrichtung nach Anspruch 11, wobei die erste Vielzahl von Messwerten auf mindestens einem der folgenden Punkte basiert: Energie, Strom oder Leistung, und wobei der mindestens eine zweite Messwert auf mindestens einem der folgenden Punkte basiert: Energie, Strom oder Leistung.

13. Überwachungsvorrichtung nach Anspruch 11, wobei der Prozessor (451) ferner eingerichtet ist:

Parameter eines Gaußschen Mischverteilungsmodells unter Verwendung des Trainingsmoduls zu bestimmen;
von der Schnittstelle (455) über das Klassifizierungsmodul (454) eine Vielzahl von zweiten Messwerten von der energieverbrauchenden Vorrichtung (420) zu empfangen;
wobei die Parameter des Gaußschen Mischverteilungsmodells mindestens einen Satz von Mittelwert und Standardabweichung einer Gaußschen Verteilung enthalten, der für mindestens einen Betriebszustand der energieverbrauchenden Vorrichtung (420) repräsentativ ist.

## Revendications

1. Procédé de détermination d'un état de fonctionnement d'un dispositif consommateur de puissance (420) consommant de l'énergie électrique, le procédé comprenant :

la sélection, par le dispositif de surveillance (450), d'au moins un modèle de classification à appliquer à une première pluralité de relevés provenant d'un capteur du dispositif consommateur de puissance (420), le modèle de classification étant sélectionné selon un type du dispositif consommateur de puissance (420) ;
la réalisation, par le dispositif de surveillance (450), d'un processus d'apprentissage à l'aide de l'au moins un modèle de classification et de la première pluralité de relevés dans le but de déterminer une pluralité de paramètres d'état associés à une pluralité d'états de fonctionnement du dispositif consommateur de puissance ;
la réception, par le dispositif de surveillance (450), d'au moins un deuxième relevé provenant du capteur (470) ;
la classification, par le dispositif de surveillance (450), du dispositif consommateur de puissance (420), la classification comportant la détermination d'un état de fonctionnement courant du dispositif consommateur de puissance (420) en fonction de l'au moins un deuxième relevé et de la pluralité de paramètres d'état, l'état de fonctionnement courant du dispositif consommateur de puissance (420) consistant en l'un de la pluralité d'états de fonctionnement du dispositif consommateur de puissance (420) ; et
la transmission, par le dispositif de surveillance (450), d'un signal à un dispositif utilisateur (480) dans le but d'afficher une notification, la notification comportant l'état de fonctionnement courant du dispositif consommateur de puissance (420).

2. Procédé selon la revendication 1, dans lequel la première pluralité de relevés sont fonction d'au moins un des éléments suivants : l'énergie, le courant ou la puissance, et dans lequel l'au moins un deuxième relevé est fonction d'au moins un des éléments suivants : l'énergie, le courant ou la puissance.

3. Procédé selon la revendication 1, dans lequel l'au moins un modèle de classification comporte un Modèle de Mélange Gaussien, la réalisation du processus d'apprentissage dans le but de déterminer la pluralité de paramètres d'état comportant la détermination de paramètres d'état du Modèle de Mélange Gaussien.

4. Procédé selon la revendication 1, comprenant en outre :
l'élimination, par le dispositif de surveillance (450), d'au moins un de la pluralité d'états de fonctionnement et de paramètres d'état associés à la pluralité d'états de fonctionnement parmi les états de fonctionnement du dispositif consommateur de puissance (420).

5. Procédé selon la revendication 1, comprenant en outre :

la détermination si la pluralité de paramètres d'état générés par un module d'apprentissage (452) contenu dans le dispositif de surveillance (450) atteignent ou non une valeur de qualité prédéterminée ; et

la génération et la transmission, par le module d'apprentissage (452), d'un message d'erreur en cas de détermination que la pluralité de paramètres d'état s'écartent de la valeur de qualité prédéterminée de plus d'un seuil prédéterminé.

6. Procédé selon la revendication 5, dans lequel la pluralité de paramètres d'état sont déterminés comme s'écartant de la valeur de qualité prédéterminée de plus d'un seuil prédéterminé lorsque le module d'apprentissage (452) détermine au moins des éléments suivants : une distribution trop large, un poids de distribution faible, un courant moyen trop faible, un courant moyen trop élevé ou un rapport indésirable entre des moyennes d'état.

7. Procédé selon la revendication 6, comprenant en outre :
la sélection d'un module d'apprentissage différent (452) lorsque la pluralité de paramètres d'état sont déterminés comme s'écartant de la valeur de qualité prédéterminée de plus d'un seuil prédéterminé.

8. Procédé selon l'une quelconque des revendications 1 à 7, dans lequel la réalisation du processus d'apprentissage dans le but de déterminer la pluralité de paramètres d'état comporte en outre :

le calcul d'une probabilité de l'association de la pluralité de deuxièmes relevés à l'une d'une pluralité de distributions gaussiennes et la détermination d'une distribution à probabilité maximale ; et

l'association de la distribution à l'un des états de fonctionnement du dispositif consommateur de puissance (420).

9. Procédé selon la revendication 1, comprenant en outre :
la détermination d'une pluralité de paramètres d'état associés à un état de fonctionnement additionnel consistant en une combinaison de la pluralité de paramètres d'état d'au moins deux de la pluralité d'états de fonctionnement.

10. Procédé selon la revendication 1, dans lequel la notification comporte en outre une présentation en fonction du temps d'états de fonctionnement du dispositif consommateur de puissance (420).

11. Dispositif de surveillance (450) permettant la détermination d'une pluralité d'états de fonctionnement d'un dispositif consommateur de puissance (420) consommant de l'énergie électrique, le dispositif de surveillance (450) comprenant :

une interface (455) avec un réseau (410) destinée à recevoir une première pluralité de relevés relatifs au dispositif consommateur de puissance (420) via le réseau (410) et destinée à transmettre un signal à un dispositif utilisateur (480) dans le but d'afficher une notification ;

un processeur (451) couplé à l'interface (455) ;

une mémoire (453) sur laquelle sont enregistrées des instructions qui, lorsqu'elles sont exécutées par le processeur (451), amènent le processeur (451) à :

appliquer, à l'aide d'un module d'apprentissage (452), au moins un modèle de classification sur la première pluralité de relevés dans le but de déterminer une pluralité de paramètres associés à une pluralité d'états de fonctionnement du dispositif consommateur de puissance (420), le modèle de classification étant sélectionné selon un type du dispositif consommateur de puissance (420) ;

recevoir, par le biais d'un module classificateur (454) en provenance du module d'apprentissage (452), la pluralité de paramètres associés à la pluralité d'états de fonctionnement du dispositif consommateur de puissance (420) ;

recevoir, par le biais du module classificateur (454) en provenance de l'interface (455), au moins un deuxième relevé provenant du dispositif consommateur de puissance (420) ; et

classifier, à l'aide du dispositif classificateur (454), le dispositif consommateur de puissance (420) en déterminant un état de fonctionnement courant du dispositif consommateur de puissance (420) en fonction de l'au moins un deuxième relevé et de la pluralité de paramètres d'état, l'état de fonctionnement courant du dispositif consommateur de puissance (420) consistant en l'un de la pluralité d'états de fonctionnement du dispositif consommateur de puissance (420), la notification comportant l'état de fonctionnement courant du dispositif consommateur de puissance (420).

12. Dispositif de surveillance selon la revendication 11, dans lequel la première pluralité de relevés sont fonction d'au moins un des éléments suivants : l'énergie, le courant ou la puissance, et dans lequel l'au moins un deuxième relevé est fonction d'au moins un des éléments suivants : l'énergie, le courant ou la puissance.

**13.** Dispositif de surveillance selon la revendication 11, dans lequel le processeur (451) est configuré en outre pour :

déterminer des paramètres d'un Modèle de Mélange Gaussien à l'aide du module d'apprentissage ;
recevoir, en provenance de l'interface (455) par le biais du module classificateur (454), une pluralité de deuxièmes relevés provenant du dispositif consommateur de puissance (420) ;
les paramètres du Modèle de Mélange Gaussien comportant au moins un ensemble d'une moyenne et d'un écart-type d'une distribution gaussienne représentant au moins un état de fonctionnement du dispositif consommateur de puissance (420).

FIGURE 1

FIGURE 2

RTU circuit energy consumption

FIGURE 3

FIGURE 4

FIGURE 5

FIGURE 6

START

700

A

S710

Select a PCD for
training

S720

Determine the type of
the selected PCD

S730

Receive historical data
for the selected PCD

S740

Select appropriate data
model tor the selected PCD

S750

Perform a training session
to determine parameters of
the selected PCD

S760

Provide parameters of
the selected PCD to CM

S770

More PCDs?          Yes          A

No

END

FIGURE 7

800

```
        ┌─────────────────┐
        │     START       │
        └─────────────────┘
                 │
                 ▼           S810
        ┌─────────────────┐
        │  Select a PCD for │
        │     training    │
        └─────────────────┘
                 │
                 ▼           S820
        ┌─────────────────┐
        │ Get classification │
        │ parameters from TM │
        └─────────────────┘
                 │
   ┌───┐         ▼           S830
   │ A │──────▶ /  Receive a reading  /
   └───┘       /_____/
                 │
                 ▼           S840
        ┌─────────────────┐
        │ Determine operational state │
        │   of the selected PCD │
        └─────────────────┘
                 │
                 ▼           S850
          / Notify determined /
         / PCD operational state /
                 │
                 ▼       S860
              ◇ More  ◇  Yes   ┌───┐
              ◇ readings? ◇────▶│ A │
                 │No           └───┘
                 ▼
        ┌─────────────────┐
        │      END        │
        └─────────────────┘
```

FIGURE 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120290230 A1
- US 9135667 B
- US 20060178887 A1
- US 760867
- US 14586605 B
- US 662039